# EUROPEAN PATENT SPECIFICATION

(11) **EP 1 998 127 B1**
(45) Date of publication and mention of the grant of the patent: **18.09.2013**
(21) Application number: 07380151.6
(22) Date of filing: 29.05.2007
(51) Int. Cl.: F26B 5/04, F26B 23/00

(54) **Method and system for dehydration and drying at vacuum conditions**
Verfahren und System zur Entwässerung und Trocknung unter Vakuumbedingungen
Procédé et dispositif de déshydratation et de séchage sous des conditions de vide

(43) Date of publication of application: 03.12.2008
(73) Proprietor: Lealesa Quality SL, 08021 Barcelona (Barcelona) (ES); Sociedad Cientifica de Peritos L-Tron, Moscú (RU)
(72) Inventor: Kovalév, L. K. Lealesa Quality, SL, 08021 Barcelona (ES); Kovaleva, N. L. Lealesa Quality, SL, 08021 Barcelona (ES)
(74) Representative: Gislon, Gabriele

(56) References cited:
- FR-A- 636 619
- JP-A- 11 083 315
- US-A- 2 823 742
- US-A- 4 583 301

## Description

### Field of the Art

The present invention generally relates to a method and a system which can be used for processes for dehydrating and drying under vacuum, and particularly to a method and a system for treating and using different types of biomass, agricultural waste products, porcine and poultry farm waste, as well as products for food, medicine, microbiology and other branches of the industry.

### Prior State of the Art

Patent document N° RU 2121638 describes a method and a mechanism for drying matter under vacuum by means of a thermal energy delivery by a method for conductively heating heated shelves and a condensed steam diversion.

Said patent document describes a method and a mechanism for drying under vacuum in which the dehydration is carried out in two phases by means of supplying heat to heated shelves. In the first phase, the necessary vacuum is established and then the shelves with the matter are heated to a temperature that does not exceed the extremely admissible temperature. In the second phase, maintaining the same temperature of the shelves, the vacuum is reduced and the drying continues until the moisture of the matter does not exceed 5% and its temperature is close to the temperature of the shelves. The mechanism contains a vacuum chamber with the shelves for matter to be dehydrated, the chamber being connected through a steam-air mixture battery dryer to a circulating water pump and to a deep vacuum pump and also to a cooling machine.

The drawbacks of said technical solution are the large irrevocable losses of thermal energy in the battery dryer and in the cooling machine.

The closest technical solution is the method for dehydrating matter at low temperatures under vacuum and the mechanism for carrying it out described in patent document RU N° 2246079.

The method according to said patent N° RU 2246079 is carried out such that the thermal energy coming out of the collection and diversion of the condensed steam is returned to the initial matter heating system, and such that the initial matter in the vacuum chamber is treated at a pressure from 0.5 to 0.01 bar and a temperature from 20 to 85°C.

The mechanism carrying out said method has a heating system providing a thermal energy regeneration by means of introducing heat exchangers in the system for collecting condensed steam, a heat pump heating a heat carrying fluid which is directed to heat exchangers located inside the vacuum chamber, which is at an internal pressure that is lower than atmospheric pressure and which in turn comprises a collection and unloading outlet of the end dry product.

The drawback of said technical solution is the heat loss in the system for collecting and diverting the condensate, the impossibility of using the heat coming out during the dehydration for preliminarily heating the initial matter, as well as the need for an *ex profeso* water heating system, in order to use the heated water as a heat carrier for the heat exchangers of the vacuum chamber.

US 2823742 discloses the preamble of claim 1 and concerns to a process and a plant for drying slime by heating it from heat transmitted from heat exchangers coming from steam circulating through said heat exchangers. In said document there is proposed a compressor connected to the inlet of hollow heat dryers forming said heat exchangers, which compressor compresses hot vapors coming from the water contained in the slime, thereby increasing its temperature before supplying it to the heat exchangers. There is not described in US 2823742 any other kind of regulating means for regulating the pressure inside said hollow heat dryers than said compressor.

### Description of the Intention

The problem, to the solving of which the proposed invention is intended, consists of reducing, in a system for dehydrating and drying under vacuum, the mentioned thermal energy losses and of using water steam with a pressure from 0.1 to 1 bar as a heat currying fluid circulating through the heat exchangers of the vacuum chamber.

The thermophysical properties of the water contained in the treated matter and of the steam formed in the process for dehydrating such matter are considered as the basis of the provided invention as defined by claim 1.

The invention relates to a system for dehydrating and drying under vacuum, comprising:
- a vacuum chamber with:
   heat exchangers for heating initial matter to be dehydrated,
   an inlet for introducing said initial matter in said vacuum chamber on said heat exchangers,
   a first outlet for unloading the dry end product resulting from the dehydration of the initial matter,
   a second outlet for discharging the steam resulting from the dehydration of the initial matter,

   - a first vacuum pump for removing air from the vacuum chamber, up to values from 0.01 to 0.5 bar,
   - an input heat generating system joined to said heat exchangers of the vacuum chamber to at least provide heat to a fluid circulating through inner tubular channels of the heat exchangers,
   - an output heat exchanger joined to the vacuum chamber through said second outlet to condense the steam coming out of said vacuum chamber,
   - at least one tank joined to said output heat exchanger for collecting said condensed steam.

Unlike conventional systems, in the system proposed, said input heat generating system comprises a secondary steam source connected with said inner tubular channels of said heat exchangers of the vacuum chamber, said fluid circulating through the heat exchangers being a secondary steam supplied by said secondary steam source to heat the initial matter during the condensation of said secondary steam.

The proposed system comprises a second vacuum pump and a tank connected with the outlet of said inner tubular channels of said heat exchangers of the vacuum chamber, said second vacuum pump being connected to regulate the pressure inside said inner tubular channels of the heat exchangers to ensure the condensation of the secondary steam inside the inner tubular channels with a temperature that is greater, in a predetermined range (preferably from 2 to 15 °C), than the temperature of the saturated steam in the vacuum chamber resulting from the dehydration of the initial matter, and said tank being connected to receive the condensed secondary steam.

The mentioned vacuum pump is adapted to regulate the pressure inside said inner tubular channels of the heat exchangers between 0.1 and 1 bar.

By means of the system proposed by the invention, the process for heating the initial matter during the condensation of said secondary steam is carried out by favoring the mass-energy balance, i.e., such that the amount of heat transmitted to the treated matter is balanced with the mass of water which would have to be removed from the treated matter, transform it into steam, remove said steam from the work space, and then condense it.

For one embodiment, said heat exchangers are immobile and planar with tubular channels inside them to provide heat, and the system comprises a system for loading, unloading and transferring the treated matter connected with said inlet and said first outlet.

### Brief Description of the Drawings

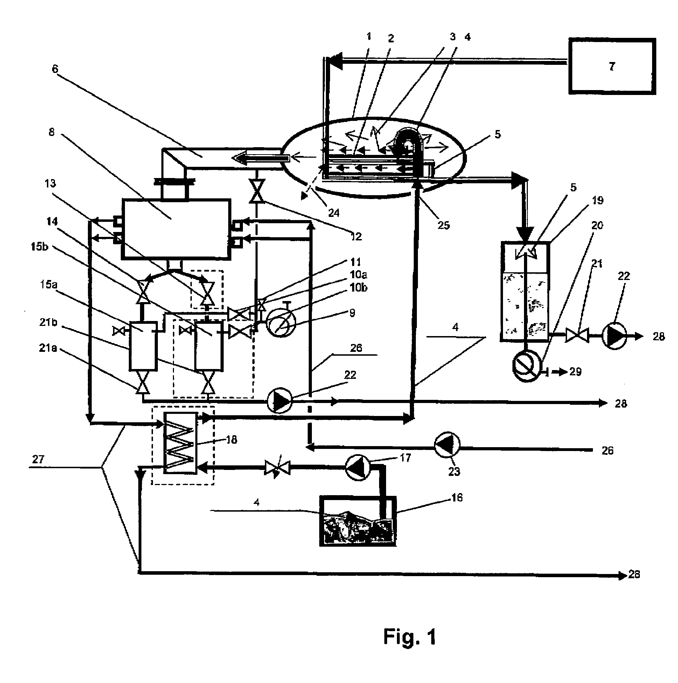

Figure 1 shows a diagram of the system for dehydrating and drying under vacuum by secondary steam proposed by the invention for an embodiment.

### Detailed Description of an Embodiment

With reference to Figure 1, it shows an embodiment of the method and system for dehydrating and drying under vacuum by secondary steam.

It is first necessary to emphasize that for the embodiment shown and described below, the system elements shown in Figure 1 inside respective rectangles with dotted lines, i.e. the second tank 15b for collecting condensed steam connected with the output heat exchanger 8, the vacuum pump 9 and the pump 22, through respective valves 13, 10b and 21b, as well as the preliminary heat exchanger 18, form part, as characteristic elements, of the contemporary patent application entitled "System for dehydrating organic substances at low temperatures under vacuum", filed on the same day as the application relating to the present invention, the system proposed by the present invention being valid for other embodiments that are not shown of systems which do not incorporate said elements claimed in said contemporary patent application, i.e. which do not incorporate a preliminary heat exchanger 18 nor a second tank 15b for collecting condensed steam.

The method and the system proposed by the present invention will be jointly described below based on the attached figure.

The operation of the proposed system using the method of the invention starts by using a delivery system so that initial matter 4 enters the vacuum chamber 1 through a respective inlet 25, and is arranged on the heat exchangers 2 installed inside of the vacuum chamber 1 (the purpose of which is to heat the initial matter 4), where the temperature of the inner walls of the vacuum chamber 1 is few degrees higher than the working temperature of evaporation surfaces of the heat exchangers 2 due to a thermal jacket (not shown) of the vacuum chamber 1, which jacket surrounds the inner walls. The residual gas environment in the vacuum chamber 1 basically consists of steam 3 coming out of the initial matter 4 which is located on the surfaces of the heat exchangers 2 during its dehydration. Secondary steam 5 passes through inner tubular channels of the heat exchangers 2 as a heat carrying fluid coming from a secondary steam source 7. The vacuum chamber 1 can be equipped with several steam conduits 6 or second outlets 6.

Said initial matter 4 can be successively transferred downwards along an evaporation surface of the upper parts of said heat exchangers 2, with a subsequent unloading of a dry product by means of a first outlet 24 towards the outside of the vacuum chamber 1. As the initial matter 4 is transferred through the evaporation surfaces of the heat exchangers 2 of the vacuum chamber 1, at the inner temperature corresponding to vacuum, a dehydration process occurs. The formed steam 3 circulates through a second outlet 6 joining the vacuum chamber 1 and an output heat exchanger 8. In this output heat exchanger 8, the formed steam 3 condenses and passes to one of the tanks 15a, 15b to collect the condensed steam. A vacuum pump 9 with the aid of a system of valves 10a, 10b, 11, 12, is connected by means of intermediate valves 13 and 14 to one or several tanks 15a, 15b for collecting the condensed steam.

At the outlet of the output heat exchanger 8, the water 27 is already heated and can pass to the preliminary heat exchanger 18, in which the cold initial matter 4 coming from the tank 16 is located. Thanks to this heat exchange, the initial matter 4 can be pre-heated before entering the vacuum chamber 1. With the aid of a pump 17 and of controlled valves, the pre-heated initial matter 4 is delivered through said preliminary heat exchanger 18 to the vacuum chamber 1, specifically on the evaporation surface of the heat exchangers 2. The conductive heating of the initial matter 4 on the evaporation surfaces of the heat exchangers 2 occurs from the thermal energy obtained with the condensation of the mentioned secondary steam 5 circulating inside said tubular channels which the heat exchangers 2 of said vacuum chamber 1 have. The pressure inside said heat exchangers 2 is regulated so as to maintain it at a specific level by means of a vacuum pump 20, with a corresponding steam exhaust 29, which pump ensures the mentioned process for condensing the secondary steam 5 for a temperature difference range, with respect to the temperature of the saturated steam 3 coming from the initial matter 4, ranging from 2 to 15°C, the process for dehydrating initial matter 4 being carried out continuously.

There is thus a heat rotation, a preliminary heating of the initial matter 4 in said preliminary heat exchanger 18 (process and elements claimed in the aforementioned contemporary patent application) and a use of thermal energy from secondary steam 5 inside the system for dehydrating and drying under vacuum, in order to save energy.

As described previously, the hot secondary steam 5 can condense inside the heat exchangers 2 and conductively transfer its energy to the initial matter 4 located on the evaporation surface of the heat exchangers 2, with the formation of steam 3.

The vacuum necessary in the vacuum chamber 1 is conserved by vacuum pumps 9 and thanks to the constant condensation of steam 3. The working pressure in the vacuum chamber 1 in the pressure range from 0.01 to 0.5 bar further ensures the boiling and evaporation of the water component of the initial matter 4 at temperatures from 50 to 80 °C.

The inner tubular channels of the heat exchangers 2 are joined to a receiving tank 19 and to a vacuum pump 20. Both the tanks 15a, 15b for collecting the condensate and said receiving tank 19 are joined by valves 21 to respective pumps 22, for a possible discharge 28 of the condensed steam which has accumulated therein. Likewise, a pump 23 provides the cold water delivery 26 to the output heat exchanger 8. The dry end product 24 can finally be removed from the vacuum chamber 1 with the aid of an unloading system.

The constant heating, the pressure of the secondary steam 5 for a temperature difference range, with respect to the temperature of the saturated steam 3, ranging from 2 to 15°C, the top-to-bottom transfer of the initial matter 4 through the evaporation surfaces of the heat exchangers 2, the continuous loading of the initial product 4 considering the capacity of the preliminary heat exchanger 18, the constant diversion of the condensed steam to the tanks 15a, 15b and the unloading of the end product 24 ensure a continuous cycle of dehydration under vacuum until achieving the necessary moisture value.

A person skilled in the art could introduce variations and modifications in the embodiment shown and described without departing from the scope of the invention as it is defined in the attached claims.

## Claims

1. A system for dehydrating and drying under vacuum, comprising:
- a vacuum chamber (1) with:
- heat exchangers (2) for heating initial matter (4) to be dehydrated,
- an inlet (25) for introducing said initial matter (4) in said vacuum chamber (1) on or close to said heat exchangers (2),
- a first outlet (24) for unloading the dry end product resulting from the dehydration of the initial matter (4),
- a second outlet (6) for discharging the steam resulting from the dehydration of the initial matter (4),
- a first vacuum pump (9) for removing air from the vacuum chamber (1),
- an input heat generating system joined to said heat exchangers (2) of the vacuum chamber (1) to at least provide heat to steam (5) circulating through inner tubular channels of the heat exchangers (2),
- an output heat exchanger (8) joined to the vacuum chamber (1) through said second outlet (6) to condense the steam coming out there from,
- at least one tank (15a) connected to said output heat exchanger (8) for collecting said condensed steam, and
- a second vacuum pump (20);
**characterized in that**:
said input heat generating system comprises a secondary steam source (7) generating secondary steam and being connected with said inner tubular channels of said heat exchangers (2) of the vacuum chamber (1), said secondary steam (5) circulating through the heat exchangers (2) heating the initial matter (4) during the condensation of said secondary steam (5),
said second vacuum pump (20) being connected to regulate the pressure inside said inner tubular channels of the heat exchangers (2) to ensure the condensation of the secondary steam (5) inside the inner tubular channels with a temperature that is greater, in a predetermined range, than the temperature of the saturated steam (3) in the vacuum chamber (1) resulting from the dehydration of the initial matter (4).

2. A system according to claim 1, **characterized in that** said predetermined temperature range is from 2 to 15 °C.

3. A system according to claim 1, **characterized in that** said vacuum pump (20) is adapted to regulate the pressure inside said inner tubular channels of the heat exchangers (2) between 0.1 and 1 bar.

## Patentansprüche

1. System zum Entwässern und Trocknen unter Vakuum, umfassend:
- eine Vakuumkammer (1) mit:
- Wärmetauschern (2) zum Erwärmen von zu entwässerndem Ausgangsmaterial (4),
- einem Eingang (25) zum Einführen des genannten Ausgangsmaterials (4) in der genannten Vakuumkammer (1) auf den genannten Wärmetauschern (2) oder in der Nähe derselben,
- einem ersten Ausgang (24) zum Entladen des trockenen Endprodukts, welches aus der Entwässerung des Ausgangsmaterials (4) resultiert,
- einem zweiten Ausgang (6) zum Abführen des Dampfs, welcher aus der Entwässerung des Ausgangsmaterials (4) resultiert,
- eine erste Vakuumpumpe (9) zum Entfernen von Luft aus der Vakuumkammer (1),
- ein Wärmezufuhrerzeugungssystem, welches mit den genannten Wärmetauschern (2) der Vakuumkammer (1) verbunden ist, um mindestens Wärme für den Dampf (5), welcher durch innere rohrförmige Kanäle der Wärmetauscher (2) fließt, bereitzustellen,
- einen Abgabewärmetauscher (8), welcher mit der Vakuumkammer (1) durch den genannten zweiten Ausgang (6) verbunden ist, um den Dampf, welcher daraus austritt, zu kondensieren,
- mindestens einen Behälter (15a), welcher an dem genannten Abgabewärmetauscher (8) angeschlossen ist, um den genannten kondensierten Dampf zu sammeln, und
- eine zweite Vakuumpumpe (20);
**dadurch gekennzeichnet, dass**:
das genannte Wärmezufuhrerzeugungssystem eine sekundäre Dampfquelle (7) umfasst, welche einen sekundären Dampf erzeugt und an den genannten inneren rohrförmigen Kanälen der genannten Wärmetauscher (2) der Vakuumkammer (1) angeschlossen ist, wobei der genannte sekundäre Dampf (5), welcher durch die Wärmetauscher (2) fließt das Ausgangsmaterial (4) während der Kondensierung des genannten sekundären Dampfs (5) erwärmt,
die genannte zweite Vakuumpumpe (20) zum Regulieren des Drucks innerhalb der genannten inneren rohrförmigen Kanäle der Wärmetauscher (2) angeschlossen ist, um die Kondensierung des sekundären Dampfs (5) innerhalb der inneren rohrförmigen Kanäle zu gewährleisten, mit einer Temperatur die, in einem vorbestimmten Bereich, größer als die Temperatur des gesättigten Dampfs (3) in der Vakuumkammer (1) ist, welcher aus der Entwässerung des Ausgangsmaterials (4) resultiert.

2. System nach Anspruch 1, **dadurch gekennzeichnet, dass** der genannte vorbestimmte Temperaturbereich von 2 bis 15°C beträgt.

3. System nach Anspruch 1, **dadurch gekennzeichnet, dass** die genannte Vakuumpumpe (20) geeignet ist, um den Druck innerhalb der genannten inneren rohrförmigen Kanäle der Wärmetauscher (2) zwischen 0,1 und 1 bar zu regulieren.

## Revendications

1. Un système pour déshydrater et sécher sous vide comportant:
- une chambre à vide (1) avec:
- des échangeurs thermiques (2) pour chauffer la matière initiale (4) à déshydrater,
- un orifice d'entrée (25) pour introduire cette matière initiale (4) dans cette chambre à vide (1) sur ou proche de ces échangeurs thermiques (2),
- un premier orifice de sortie (24) pour décharger le produit final sec résultant de la déshydratation de la matière initiale (4),
- un deuxième orifice de sortie (6) pour décharger la vapeur résultant de la déshydratation de la matière initiale (4),
- une première pompe à vide (9) pour retirer de l'air de la chambre à vide (1),
- un système générateur de chaleur d'entrée uni à ces échangeurs thermiques (2) de la chambre à vide (1) pour au moins fournir de la chaleur à la vapeur (5) circulant à travers des conduits tubulaires intérieurs des échangeurs thermiques (2),
- un échangeur thermique de sortie (8) uni à la chambre à vide (1) à travers ce deuxième orifice de sortie (6) pour condenser la vapeur provenant de celle-ci,
- au moins un réservoir (15a) relié par cet échangeur thermique de sortie (8) pour recueillir cette vapeur condensée, et
- une deuxième pompe à vide (20);
**caractérisé en ce que**
ce système générateur de chaleur d'entrée comporte une source de vapeur secondaire (7) générant de la vapeur secondaire et étant connectée à ces conduits tubulaires intérieurs de ces échangeurs thermiques (2) de la chambre à vide (1) cette vapeur secondaire (5) circulant à travers les échangeurs thermiques (2) chauffant la matière initiale (4) durant la condensation de cette vapeur secondaire (5),
cette deuxième pompe à vide (20) étant connectée pour réguler la pression à l'intérieur de ces conduits tubulaires intérieurs de l'échangeur thermique (2) pour assurer la condensation de la vapeur secondaire (5) à l'intérieur des conduits tubulaires intérieurs ayant une température qui est plus élevée, dans une certaine gamme, que la température de la vapeur saturée (3) dans la chambre à vide (1) résultant de la déshydratation de la matière initiale (4).

2. Un système conformément à la revendication 1, **caractérisé en ce que** cette gamme de température prédéterminée est de 2 à 15° C.

3. Un système conformément à la revendication 1, **caractérisé en ce que** cette pompe à vide (20) est adaptée pour réguler la pression à l'intérieur de ces conduits tubulaires intérieurs des échangeurs thermiques (2) entre 0,1 et 1 bar.
